# EUROPEAN PATENT SPECIFICATION

(11) **EP 3 020 760 B1**
(45) Date of publication and mention of the grant of the patent: **08.05.2019**
(21) Application number: 14822738.2
(22) Date of filing: 04.07.2014
(51) Int. Cl.: C08L 23/16, C08K 3/00, C08K 3/40, C08K 5/20, C08L 23/08, C08L 23/26, C08L 23/14

(54) **PROPYLENE-BASED RESIN COMPOSITION**
HARZZUSAMMENSETZUNG AUF PROPYLENBASIS
COMPOSITION DE RÉSINE À BASE DE PROPYLÈNE

(30) Priority: 08.07.2013 JP 2013142698
(43) Date of publication of application: 18.05.2016
(73) Proprietor: Prime Polymer Co., Ltd., Tokyo 105-7117 (JP)
(72) Inventor: KUSUMOTO, Tatsuya, Sodegaura-shi Chiba 299-0265 (JP); KAWAMURA, Tatsuji, Sodegaura-shi Chiba 299-0265 (JP); FUKADA, Toru, Sodegaura-shi Chiba 299-0265 (JP); MATSUDA, Yuichi, Sodegaura-shi Chiba 299-0265 (JP); DOI, Kazuhiro, Sodegaura-shi Chiba 299-0265 (JP)
(74) Representative: Hoffmann Eitle
(86) International application number: PCT/JP2014/067907
(87) International publication number: WO 2015/005239

(56) References cited:
- WO-A1-02/074855
- WO-A1-2013/035764
- WO-A1-2013/035764
- GB-A- 2 309 973
- JP-A- H11 228 759
- JP-A- S60 212 440
- JP-A- S61 123 642
- JP-A- S61 236 844
- JP-A- 2007 517 104
- JP-A- 2009 079 117
- JP-A- 2010 053 332
- JP-A- 2011 500 946
- JP-A- 2011 521 028
- JP-A- 2012 241 055
- JP-A- 2013 116 981
- US-A1- 2007 276 063

## Description

### TECHNICAL FIELD

The present invention relates to propylene resin compositions that can give shaped articles having excellent mechanical characteristics and excellent flaw resistance.

### BACKGROUND ART

Articles obtained by the injection molding of propylene resin compositions are used in various fields such as automobile parts and home appliance parts due to their excellent mechanical properties, shaping properties and economic efficiency.

In the field of automobile parts, polypropylene is used alone or in combination with rubber components such as ethylene-propylene copolymer (EPR), ethylene-butene copolymer (EBR), ethylene-octene copolymer (EOR), styrene-butadiene copolymer (SBR) and polystyrene-ethylene/butene-polystyrene triblock copolymer (SEBS) to attain an improvement in impact resistance (see Patent Literatures 1 and 2), in combination with inorganic fillers such as talc, mica and glass fibers to attain improved rigidity, or in the form of polymer blends with excellent mechanical properties imparted by the addition of both rubber components and inorganic fillers.

Meanwhile, it is known that polypropylene shaped articles generally have low flaw resistance. Examples of the flaws that occur on polypropylene shaped articles include scratches by the scraping of the article surface with a sharp edge, and glazed marks by the compression or rubbing on the article surface with a wide, large or soft body.

### CITATION LIST

### PATENT LITERATURE

Patent Literature 1: JP-A-2006-307015
Patent Literature 2: JP-A-2006-316103

### SUMMARY OF INVENTION

### TECHNICAL PROBLEM

An object of the invention is to provide a propylene resin composition that can give shaped articles resistant to flaws such as scratches and glazed marks and having excellent mechanical characteristics.

### SOLUTION TO PROBLEM

The present inventors carried out extensive studies in order to achieve the above object. As a result, the present inventors have found that a propylene resin composition described below can give shaped articles resistant to flaws such as scratches and glazed marks and having excellent mechanical characteristics, and is thus suited for use in the production of automobile interior parts. The present invention has been completed based on the finding.

A propylene resin composition of the invention includes:
(A) a propylene-ethylene random copolymer having a melt flow rate of 5 to 100 g/10 min as measured at 230°C under 2.16 kg load in accordance with ASTM D1238 and a content of ethylene-derived structural units of 2 to 8 mol% relative to all the structural units;
(B) an ethylene-α-olefin copolymer obtained by copolymerizing ethylene with one or more α-olefins selected from α-olefins having 3 to 10 carbon atoms, the copolymer having a melt flow rate of 0.1 to 80 g/10 min as measured at 230°C under 2.16 kg load in accordance with ASTM D1238;
(C) a fibrous filler having an average fiber length of 0.1 to 2 mm;
(D) a lubricant; and
(E) a modified polypropylene;
the content of (A) being 35 to 85 parts by weight, the content of (B) being 5 to 25 parts by weight, the content of (C) being 10 to 40 parts by weight, the content of (D) being 0.01 to 1.0 part by weight, and the content of (E) being 0.1 to 3 parts by weight with respect to the total of the contents of (A) to (C) taken as 100 parts by weight.

In the invention, the content of ethylene-derived structural units in the propylene-ethylene random copolymer (A) is preferably 3 to 8 mol% relative to all the structural units.

In the invention, the content of α-olefin-derived structural units in the ethylene-α-olefin copolymer (B) is preferably 5 to 60 mol% relative to all the structural units in the copolymer.

In the invention, the fibrous filler (C) is preferably a glass fiber filler.

In the invention, α-olefin-derived structural units constituting the ethylene-α-olefin copolymer (B) are preferably structural units derived from one or more selected from propylene, 1-butene, 1-hexene and 1-octene.

In the invention, the lubricant (D) is preferably erucamide.

In the invention, the modified polypropylene (E) is preferably maleic anhydride-modified polypropylene.

A shaped article such as an automobile interior or exterior part or a home appliance part may be formed from the propylene resin composition.

### ADVANTAGEOUS EFFECTS OF INVENTION

The propylene resin compositions according to the present invention can give shaped articles which exhibit excellent flaw resistance and mechanical characteristics, in particular rigidity and impact resistance, while ensuring that these properties are well balanced at a high level.

### BRIEF DESCRIPTION OF DRAWINGS

Fig. 1 is a photograph illustrating a test piece of Example 1 after Ford 5-Finger Test in which the glazing resistance was evaluated by allowing a stylus with a tip radius of 7 mm to run on a grained surface of the test piece.
Fig. 2 is a photograph illustrating a test piece of Comparative Example 1 after Ford 5-Finger Test in which the glazing resistance was evaluated by allowing a stylus with a tip radius of 7 mm to run on a grained surface of the test piece.
Fig. 3 is a set of an electron micrograph (magnification x200) (upper view) of the test piece of Example 1 after the glazing resistance evaluation, and a graph (lower view) showing the height from the bottom surface of the test piece to the flawed surface in a cross section indicated with the dotted line in the micrograph.
Fig. 4 is a set of an electron micrograph (magnification x200) (upper view) of the test piece of Comparative Example 1 after the glazing resistance evaluation, and a graph (lower view) showing the height from the bottom surface of the test piece to the flawed surface in a cross section indicated with the dotted line in the micrograph.

### DESCRIPTION OF EMBODIMENTS

The present invention will be described in detail hereinbelow.

A propylene resin composition of the invention includes a propylene-ethylene random copolymer (A), an ethylene-α-olefin copolymer (B), a fibrous filler (C), a lubricant (D) and a modified polypropylene (E). The characteristics of these components will be described below.

Hereinbelow, the constituent components and optional components will be described in detail.

### (Propylene-ethylene random copolymers (A))

In the invention, the propylene-ethylene random copolymer (A) is obtained by copolymerizing propylene and ethylene.

The propylene-ethylene random copolymer (A) has a melt flow rate of 5 to 100 g/10 min, preferably 5 to 75 g/10 min, and more preferably 5 to 50 g/10 min as measured at 230°C under 2.16 kg load in accordance with ASTM D1238. If the melt flow rate is less than 5 g/10 min, the resin exhibits poor fluidity during shaping and may fail to fill corners of a mold in the fabrication of large articles such as instrument panels and door trims. If the melt flow rate is higher than 100 g/10 min, the obtainable shaped articles do not show sufficient impact resistance.

In the propylene-ethylene random copolymer (A), the content of ethylene-derived structural units is 2 to 8 mol%, preferably 3 to 8 mol%, and more preferably 3 to 7 mol% relative to all the structural units in the copolymer. The content of ethylene-derived structural units in the copolymer may be determined by infrared spectroscopy (IR) or NMR. If the content is less than 2 mol%, the obtainable shaped articles exhibit so high rigidity that the impact resistance will be lowered and the flaw resistance may be decreased. Further, such a low content leads to an increase in crystallization temperature, and consequently the grain transfer properties tend to be deteriorated and the gloss tends to be increased. If the content exceeds 9 mol%, the resin composition exhibits so high flexibility that the strength of shaped articles tends to be decreased.

In the invention, the propylene-ethylene random copolymer (A) may be prepared by performing the copolymerization in the presence of a known olefin polymerization catalyst. Specific examples of the olefin polymerization catalysts include so-called Ziegler-Natta catalysts including a solid titanium catalyst component and an organometallic compound catalyst component, and metallocene catalysts.

The propylene-ethylene random copolymer (A) in the invention has higher elastic recovery and higher flexibility than propylene homopolymer. By virtue of these properties, shaped articles including the polymer tend to show a recovery from flaws by external force to such an extent that the flaws become inconspicuous.

### (Ethylene-α-olefin copolymers (B))

In the invention, the ethylene-α-olefin copolymer (B) is obtained by copolymerizing ethylene with one or more α-olefins selected from α-olefins having 3 to 10 carbon atoms. The α-olefin is preferably selected from propylene, 1-butene, 1-hexene and 1-octene, and the α-olefins may be used alone or two or more may be used as a mixture. The use of these monomers is particularly preferable because of high elastic recovery, flexibility and flaw resistance.

The ethylene-α-olefin copolymer (B) has a melt flow rate of 0.1 to 80 g/10 min, preferably 0.5 to 70 g/10 min, and more preferably 1 to 70 g/10 min as measured at 230°C under 2.16 kg load in accordance with ASTM D1238. If the melt flow rate is less than 0.1 g/10 min, the resin tends to exhibit low fluidity and poor dispersibility during kneading, and consequently the obtainable shaped articles exhibit poor properties such as impact resistance and have an unsatisfactory surface appearance. If, on the other hand, the melt flow rate exceeds 80 g/10 min, the obtainable shaped articles do not show sufficient impact resistance and the gloss of the surface of shaped articles is increased.

In the ethylene-α-olefin copolymer (B), the content of α-olefin-derived structural units is preferably 5 to 60 mol%, more preferably 7 to 50 mol%, and still more preferably 10 to 45 mol% relative to all the structural units in the copolymer.

The ethylene-α-olefin copolymer is preferably ethylene-octene copolymer or ethylene-butene copolymer.

### (Fibrous fillers (C)〉

Examples of the fibrous fillers (C) in the invention include natural fibers such as carbon fibers (fibrous carbon), carbon nanotubes, basic magnesium sulfate fibers (magnesium oxysulfate fibers), potassium titanate fibers, aluminum borate fibers, calcium silicate fibers, calcium carbonate fibers, glass fibers, silicon carbide fibers, wollastonite, xonotlite, various metal fibers, cottons, celluloses, silks, wools and hemps, semisynthetic fibers such as regenerated fibers including rayon and cupra, acetates and Promix fibers, synthetic fibers such as polyesters, polyacrylonitriles, polyamides, aramids and polyolefins, and modified fibers obtained by chemically modifying the surface and ends of the above fibers.

Of these, celluloses such as nanocelluloses and TEMPO-oxidized nanocelluloses; glass fibers; carbon fibers; and carbon nanotubes such as single-wall carbon nanotubes and multiwall carbon nanotubes are preferable from viewpoints such as their high effects in enhancing the ability to meet various performances required in the designs of the inventive resin composition and shaped articles of the resin composition such as article appearance, balance of properties, dimensional stability (for example, reduction of linear expansion coefficient), size and properties.

Of the above fibers, glass fibers, carbon fibers and celluloses are most preferably used due to their versatility, easy availability and inexpensiveness.

In the propylene resin composition of the invention, the average fiber length of the fibrous filler (C) is 0.1 to 2 mm, preferably 0.3 to 1.5 mm, and more preferably 0.4 to 1.3 mm.

The above average fiber length is a value of the fibrous filler present in the propylene resin composition. The average fiber length of the fibrous filler before the addition to the composition may be, for example, about 0.1 to 10 mm. The fibrous filler having such a size before the preparation of the composition attains the aforementioned size by being broken during the preparation of the propylene resin composition described later. The average fiber diameter of the fibrous filler before the addition to the composition is not particularly limited as long as within the range of fiber diameters of fibrous fillers generally used, but is usually 1 to 25 µm, preferably 5 to 17 µm, and more preferably 8 to 15 µm. The average fiber diameter of the fibrous filler present in the composition is substantially the same as the average fiber diameter of the filler before the addition to the composition.

The average fiber length may be measured as follows. A sample is incinerated by being treated in an electric furnace at 600°C for 3 hours. The ash is then analyzed with an image analyzer (for example, LUZEX-AP manufactured by NIRECO) to calculate the lengths of fibers. The weight average fiber length calculated from the lengths is obtained as the average fiber length.

The form of a raw material from which the fibrous filler (C) is supplied may be any of various processed forms such as discontinuous fibers, continuous fibers, cloths, paper-like solid sheets, compressed masses and granules. In particular, discontinuous fibers, continuous fibers, cloths and paper-like sheets are favorably used because they are easy to handle and tend to provide a high performance of the material. Further, woven fabric cloths and paper-like sheets are advantageous in that the use of cloths or paper-like sheets is highly effective in increasing the strength of the material due to the generally expected formation of joints or linkages between the fibers.

For purposes such as to enhance the adhesion with the propylene-ethylene random copolymer (A) that is a crystalline resin and to enhance the dispersibility in the resin composition, the fibrous filler may be one that has been surface treated with any of various agents such as organic titanate coupling agents, organic silane coupling agents, polyolefins modified by the grafting of unsaturated carboxylic acids or anhydrides thereof, fatty acids, fatty acid metal salts and fatty acid esters. Further, modified fillers obtained by surface treatment with thermosetting or thermoplastic polymer components may be used without problems.

The fibrous fillers may be used singly, or two or more may be used in combination.

### (Lubricants (D)〉

Examples of the lubricants (D) in the invention include fatty acid amides. Examples of the fatty acid residues in the fatty acid amides include those residues derived from saturated and unsaturated fatty acids having approximately 15 to 30 carbon atoms. Specific examples of the fatty acid amides include oleamide, stearamide, erucamide, behenamide, palmitamide, myristamide, lauramide, caprylamide, caproamide, n-oleylpalmitamide, n-oleylerucamide, and dimers of these amides. These lubricants suitably remedy the stickiness typically encountered in the use of random polypropylene polymers. In particular, erucamide is preferable. The lubricants may be used singly, or two or more may be used in combination.

### (Modified polypropylenes (E))

The modified polypropylene (E) in the invention is obtained by modifying a polypropylene with an acid. Some of the polypropylene modification methods are graft modification and copolymerization.

Examples of the modifiers used for the modification include unsaturated carboxylic acids and derivatives thereof. Examples of the unsaturated carboxylic acids include acrylic acid, methacrylic acid, maleic acid, nadic acid, fumaric acid, itaconic acid, crotonic acid, citraconic acid, sorbic acid, mesaconic acid, angelic acid and phthalic acid. Examples of the derivatives of the acids include acid anhydrides, esters, amides, imides and metal salts, with specific examples including maleic anhydride, itaconic anhydride, citraconic anhydride, nadic anhydride, phthalic anhydride, methyl acrylate, methyl methacrylate, ethyl acrylate, butyl acrylate, monoethyl maleate ester, acrylamide, maleic acid monoamide, maleimide, N-butylmaleimide, sodium acrylate and sodium methacrylate. Of these, unsaturated dicarboxylic acids and derivatives thereof are preferable, and maleic anhydride and phthalic anhydride are particularly preferable.

When the acid modification is performed during the melt kneading process, a polypropylene and an unsaturated carboxylic acid or a derivative thereof are kneaded in an extruder together with an organic peroxide and thereby the polypropylene is modified by the graft copolymerization of the unsaturated carboxylic acid or the derivative thereof.

Examples of the organic peroxides include benzoyl peroxide, lauroyl peroxide, azobisisobutyronitrile, dicumyl peroxide, t-butyl hydroperoxide, α,α'-bis(t-butylperoxydiisopropyl)benzene, bis(t-butyldioxyisopropyl)benzene, 2,5-dimethyl-2,5-di(t-butylperoxy)hexane, 2,5-dimethyl-2,5-di(t-butylperoxy)hexyne-3, di-t-butyl peroxide and cumene hydroperoxide.

In the invention, the modified polypropylene (E) is effective in enhancing the affinity between glass fibers and the propylene resin in one embodiment of the inventive composition, and is sometimes effective in increasing, in particular, rigidity. From such viewpoints, the modified polypropylene is preferably a fatty acid anhydride-modified polypropylene, and is particularly preferably maleic anhydride-modified polypropylene.

When maleic anhydride-modified polypropylene is used as the modified polypropylene (E), the amount of the maleic anhydride-modified polypropylene used is preferably such that the content of maleic acid modifier groups (M value) will be 0.5 to 5.0 parts by weight, and more preferably 0.8 to 2.5 parts by weight with respect to 100 parts by weight of the propylene resin composition. If the amount is below this range, no effects may be obtained in the improvement of the flaw resistance of shaped articles. If the amount is above this range, the mechanical properties, in particular, the impact strength of shaped articles may be decreased.

The polypropylene as the base of the modified polypropylene (E) usually has an intrinsic viscosity [η] in the range of 0.2 to 2.0 dl/g, and more preferably 0.4 to 1.0 dl/g as measured at 135°C in decalin.

Specific examples of the maleic anhydride-modified polypropylenes include commercial products such as ADOMER from Mitsui Chemicals, Inc., UMEX from Sanyo Chemical Industries, Ltd., MZ series from DuPont, Exxelor from Exxon and POLYBOND PB3200 from Chemtura Japan Limited.

### (Other components)

The propylene resin composition of the invention may contain other additives such as heat stabilizers, antistatic agents, weather stabilizers, light stabilizers, antiaging agents, antioxidants, fatty acid metal salts, softeners, dispersants, fillers, colorants and pigments as required while still achieving the object of the invention. The order of the mixing of the components including additives is not limited. The components may be mixed at the same time or in multistages in such a manner that some of the components are mixed first and thereafter other components are mixed.

### (Propylene resin compositions)

The propylene resin composition of the invention may be produced by blending the aforementioned components (A), (B), (C), (D) and (E), and optionally other additives. These components may be added in any order.

In the propylene resin composition of the invention, the melt flow rate of the composition as a whole (230°C, 2.16 kg load) is preferably 10 g/10 min to 70 g/10 min, and particularly preferably 10 g/10 min to 45 g/10 min.

The proportions of the components in the propylene resin composition of the invention are (A) : 35 to 85 parts by weight, (B): 5 to 25 parts by weight, (C): 10 to 40 parts by weight, (D): 0.01 to 1.0 part by weight, and (E): 0.1 to 3 parts by weight with respect to the total of the components (A), (B) and (C) taken as 100 parts by weight.

The content of the component (A) is preferably 45 to 85 parts by weight, and more preferably 55 to 75 parts by weight. If the content of the component (A) is less than 35 parts by weight, the resistance of shaped articles to flaws such as glazed marks is decreased. Adding the component (A) in an amount exceeding 85 parts by weight results in a decrease in the rigidity of shaped articles.

The content of the component (B) is preferably 7 to 25 parts by weight, and more preferably 8 to 23 parts by weight. If the content of the component (B) is less than 5 parts by weight, the obtainable shaped articles do not exhibit sufficient impact resistance. Adding the component (B) in an amount exceeding 25 parts by weight results in a decrease in the rigidity (tensile elastic modulus) of shaped articles.

The content of the component (C) is preferably 10 to 30 parts by weight, and more preferably 20 to 30 parts by weight. If the content of the component (C) is less than 10 parts by weight, the rigidity (tensile elastic modulus) of shaped articles is decreased. Adding the component (C) in an amount exceeding 40 parts by weight gives rise to a risk that the surface appearance of shaped articles may be deteriorated, and also increases the probability that the fibrous filler shows anisotropic shrinkage in the machine direction MD and the transverse direction TD of shaped articles and consequently problems such as warpage occur on the shaped articles.

The content of the component (D) is preferably 0.05 to 0.7 parts by weight, and more preferably 0.1 to 0.5 parts by weight. If the content of the component (D) is less than 0.01 part by weight, the obtainable shaped articles may not exhibit sufficient flaw resistance performance. Adding the component (D) in an amount exceeding 1.0 part by weight may result in a decrease in fogging properties.

The content of the component (E) is preferably 0.5 to 2 parts by weight, and more preferably 0.5 to 1.5 parts by weight. If the content of the component (E) is less than 0.1 part by weight, the dispersibility of the fibrous filler is so decreased that the mechanical properties of shaped articles such as impact resistance and rigidity may be adversely affected. Adding the component (E) in an amount exceeding 3 parts by weight results in a decrease in the impact resistance of shaped articles.

The propylene resin composition of the invention includes the propylene-ethylene random copolymer (A) as an essential constituent component. The present inventors have confirmed that the fact that the component (A) is a relatively flexible material allows shaped articles including this polymer to exhibit elastic recovery when they are flawed by other objects, and hence the surface of the shaped article bases shows little changes. The reason why excellent flaw resistance is obtained is probably because of this characteristic.

Further, because the component (A) is a material having a low crystallization temperature, shaped articles of the composition may be grained while ensuring that the composition is not solidified until the grains are transferred to the surface sufficiently. Thus, good grain transfer properties may be obtained. This is probably the reason why the surface of shaped articles exhibits low gloss and becomes resistant to glazing.

By virtue of the propylene resin composition of the invention including the fibrous filler (C) in addition to the component (A), the flexibility of the component (A) is compensated for and consequently the final material attains an excellent balance between rigidity and impact resistance.

The propylene resin composition of the invention may be obtained by mixing or melt kneading the aforementioned components (A), (B), (C), (D) and (E) and optionally other additives with use of a mixing apparatus such as a Banbury mixer, a single-screw extruder, a twin-screw extruder or a high-speed twin-screw extruder.

The propylene resin composition of the invention is particularly suitably used for injection molding. Injection molded articles of the propylene resin composition of the invention have excellent mechanical characteristics and exhibit a resistance to flaws such as scratches and glazed marks.

The propylene resin composition of the invention discussed above may be suitably used in various fields such as automobile interior and exterior parts and home appliance parts.

### EXAMPLES

The present invention will be described in further detail based on Examples hereinbelow without limiting the scope of the invention to such Examples.

Characteristics of components and propylene resin compositions of the invention were measured as described below. The propylene resin compositions of the invention and shaped articles thereof were evaluated by the methods described below.

### (1) Measurement of melt flow rate

The melt flow rate was measured under a testing load of 2.16 kg and at a testing temperature of 230°C in accordance with ASTM D1238.

### (2) Measurement of modifier group content

A 2 g portion of an acid-modified resin was sampled and was completely dissolved in 500 ml of boiling p-xylene while performing heating. After being cooled, the solution was added to 1200 ml of acetone. The precipitate was filtered out and was dried to afford a purified polymer. The purified polymer was hot pressed into a 20 µm thick film. The film was analyzed by infrared absorption spectroscopy, and the content of the acid used for modification was determined based on the absorption assigned to the modifier acid. In the case of maleic anhydride, the absorption assigned to the modifier acid is observed at near 1780 cm⁻¹.

### (3) Measurement of room-temperature Charpy impact strength (kJ/m²)

The room-temperature Charpy impact strength was measured with respect to a notched sample with a hammer energy of 4 J in accordance with ISO 179.

### (4) Measurement of tensile elastic modulus

The tensile elastic modulus was measured at a stress rate of 1 mm/min in accordance with ISO 527.

### (5) Measurement of grain gloss

A mold was provided which had a cavity having a size 130 mm in length, 120 mm in width and 2 mmt in thickness and having a leather-grained cavity surface (depth 90 µm). While setting the mold temperature at 40 °C and the resin temperature at 210 °C, an injection molded article was obtained. The grained surface of the article was illuminated at a light source angle of 60° and the grain gloss was measured with a gloss meter (UNIGLOSS 60 manufactured by Konica Minolta, Inc.).

### (6) Evaluation of scratch resistance

A mold was provided which had a cavity having a size 130 mm in length, 120 mm in width and 2 mmt in thickness and having a leather-grained cavity surface (depth 90 µm). While setting the mold temperature at 40 °C and the resin temperature at 210°C, an injection molded article was obtained. The grained surface of the article was subjected to Ford 5-Finger Test (stylus tip radius R: 0.2 mm) to determine the maximum load (N) prior to the occurrence of visible whitening (whitening onset load). The test was performed under loads of 0.6, 2, 3, 5, 7, 10, 15 and 20 N. The higher the whitening onset load, the higher the scratch resistance.

### (7) Evaluation of glazing resistance

A mold was provided which had a cavity having a size 130 mm in length, 120 mm in width and 2 mmt in thickness and having a leather-grained cavity surface (depth 90 µm). While setting the mold temperature at 40°C and the resin temperature at 210°C, an injection molded article was obtained. The grained surface of the article was subjected to Ford 5-Finger Test (stylus tip radius R: 7 mm, testing loads: 0.6, 2, 3, 5, 7, 10, 15 and 20 N) and thereafter the change in gloss of the flawed area relative to that of the unflawed area ([gloss in flawed area]/[gloss in unflawed area]) was measured with Weld-Line-Tester (FW-098 manufactured by NIPPON DENSHOKU INDUSTRIES CO., LTD.). The smaller the gloss change, the higher the glazing resistance.

### (8) Laser micrographs

The surface of shaped articles was observed with laser microscope VK-9700 Generation II manufactured by KEYENCE CORPORATION. The magnification of the objective lens was 10 times (the actual image magnification was 200 times).

### (9) Measurement of surface height in sample cross section

The cross sectional shapes of flaws on shaped articles were analyzed using a software attached to VK-9700.

### (10) Measurement of average fiber length of fibrous filler in composition

A sample was incinerated by being treated in an electric furnace at 600°C for 3 hours. The ash was then analyzed with an image analyzer (apparatus: LUZEX-AP manufactured by NIRECO) to calculate the lengths of fibers. The weight average fiber length calculated from the lengths was obtained as the average fiber length.

The components used in Examples and Comparative Examples are listed below.
((A) Propylene-ethylene random copolymers)
   (A-1) Propylene-ethylene random copolymer
      Melt flow rate: 9 g/10 min, Content of ethylene-derived structural units: 5.3 wt%
   (A-2) Propylene-ethylene random copolymer
      Melt flow rate: 30 g/10 min, Content of ethylene-derived structural units: 5.3 wt%
   (A-3) Propylene-ethylene random copolymer
      Melt flow rate: 7 g/10 min, Content of ethylene-derived structural units: 4.2 wt%
   (A-4) Propylene-ethylene random copolymer
      Melt flow rate: 31 g/10 min, Content of ethylene-derived structural units: 4.2 wt%
((B) Ethylene-α-olefin copolymers)
   (B-1) Ethylene-1-butene random copolymer (product name: A1050S manufactured by Mitsui Chemicals, Inc.)
      Melt flow rate: 2 g/10 min
   (B-2) Ethylene-1-butene random copolymer (product name: A4050S manufactured by Mitsui Chemicals, Inc.)
      Melt flow rate: 7 g/10 min
   (B-3) Ethylene-1-butene random copolymer (product name: A35070S manufactured by Mitsui Chemicals, Inc.)
      Melt flow rate: 65 g/10 min
   (B-4) Ethylene-1-octene random copolymer (product name: EG8100 manufactured by Dow Elastomers)
      Melt flow rate: 2 g/10 min
((C) Fibrous filler)
   (C-1) Glass fiber filler (product name: T-480 manufactured by Nippon Electric Glass Co., Ltd., average fiber length 3 mm, average fiber diameter 13 µm)
((D) Lubricant)
   (D-1) Erucamide (Neutron S: manufactured by Nippon Fine Chemical Co., Ltd.)
((E) Modified polypropylene)
   (E-1) Maleic anhydride-modified polypropylene (product name: POLYBOND PB3200 manufactured by Chemtura Japan Limited.) Acid modifier group content: 0.4 wt%
((F) Decomposing agent)
   (F-1) PERHEXA 25B-40: manufactured by NOF CORPORATION

### (Others)

(A'-1) Propylene-ethylene block copolymer
   Melt flow rate: 54 g/10 min, 23°C decane soluble content: 11 wt%, Ethylene content in 23°C decane soluble content: 38 mol%
(B'-1) Ethylene-propylene-butadiene random copolymer (product name: IP4760P manufactured by Dow Elastomers)
   Melt flow rate: 0.1 g/10 min
(C'-1) Basic magnesium sulfate (product name: MOS-HIGE A-1 manufactured by Ube Material Industries, Ltd., average fiber length: 15 µm, average fiber diameter: 0.5 µm)
(C'-2) Talc (product name: JM-209 manufactured by ASADA MILLING CO., LTD., average particle diameter 5 µm)

The propylene-ethylene random copolymers (A-1) to (A-4) and the propylene-ethylene block copolymer (A'-1) were produced by the following methods.

### (Method for producing propylene-ethylene random copolymer (A-1) )

### (1) Production of solid catalyst carrier

1600 g of SiO₂ (manufactured by FUJI SILYSIA CHEMICAL LTD.) was combined with 13 L of toluene to give a slurry. At room temperature, the slurry was added to a 70 L volume reaction tank equipped with a stirrer. Further, the liquid volume was adjusted by the addition of 22 L of toluene followed by stirring. While performing stirring, the temperature in the tank was raised to 47°C and a toluene solution of triisobutylaluminum was added in an amount of 300 g in terms of triisobutylaluminum. Next, while keeping the temperature in the tank at 50°C, 8.4 L of an MAO-toluene solution (a 20 wt% solution) was added over a period of about 30 minutes. Thereafter, the temperature in the tank was increased to 95 to 98°C in 45 minutes, and the reaction was performed for 4 hours. After the completion of the reaction, the reaction system was cooled to 60°C. After the cooling, the stirring was terminated and the system was allowed to stand for 20 minutes, thereby allowing the solid component to settle. The supernatant toluene was withdrawn, and the solid component was washed with toluene one time. After being washed, the solid component was slurried with toluene and the slurry was cooled to room temperature.

### (2) Production of solid catalyst (supporting of metal catalyst component onto carrier)

A 14 L volume reaction tank equipped with a stirrer was loaded with 3.5 L of the MAO/SiO₂/toluene slurry (980 g in terms of the solid component) prepared in (1). While performing stirring, the temperature was raised to 33 to 37°C. A diluted solution of 7.0 g of a surfactant (ADEKA PLURONIC L-71 manufactured by ADEKA CORPORATION) in 2.0 L of heptane was added to the reaction tank. Stirring was performed for 45 minutes to allow the component to be supported on the carrier. Thereafter, the stirring was terminated and the system was allowed to stand for 70 minutes to settle the solid component. The supernatant liquid was removed, and the solid component was washed with heptane two times.

In a glove box, a 1 L flask was loaded with 20.6 g of diphenylmethylene(2,7-di-tert-butylfluoren-9-yl) (3-tert-butyl-5-methylcyclopentadien-1-yl)zirconium dichloride. The flask was removed from the box, and the catalyst component was diluted by the addition of 2.0 L of toluene. Thereafter, the catalyst component was added to the reaction tank held at 33 to 37°C and stirring was performed for 60 minutes to allow the catalyst component to be supported onto the carrier. The resultant diphenylmethylene(2,7-di-tert-butylfluoren-9-yl) (3-tert-butyl-5-methylcyclopentadien-1-yl) zirconium dichloride/MAO/SiO₂/toluene slurry was cooled to room temperature.

### (3) Production of prepolymerized catalyst

A 270 L volume reaction tank equipped with a stirrer was loaded with 66 L of n-heptane beforehand. At room temperature, 210 g of triisobutylaluminum was diluted with 1.0 L of toluene and the diluted liquid was added to the reaction tank. While performing stirring, the temperature was raised to 33 to 37°C. 980 g of the solid catalyst component prepared in (2) was transferred to the reaction tank, and the volume of the liquid in the reaction tank was adjusted to 82 L by the addition of n-heptane. After the adjustment, the reaction tank was evacuated. While maintaining the temperature at 33 to 37°C, a total of 3190 g of ethylene was supplied at 210 g/h for 60 minutes, at 420 g/h for 60 minutes and at 640 g/h for 240 minutes, and the reaction was performed for 360 minutes while performing stirring. After the completion of the polymerization, the stirring was terminated and the system was allowed to stand for 40 minutes to settle the solid component. The supernatant liquid was removed, and the solid component was washed with heptane two times. The resultant prepolymerized catalyst was resuspended in purified heptane. The concentration of the solid catalyst component was adjusted to 34 g/L by the addition of heptane. Thus, a catalyst slurry was obtained. The prepolymerized catalyst contained 3 g of the polyethylene per 1 g of the solid catalyst component.

### (4) Main polymerization

To a 70 L volume polymerization vessel equipped with a stirrer, propylene was supplied at 125 kg/h and hydrogen was supplied so that the hydrogen concentration in the gas phase would be 0.2 mol%. There were continuously supplied the catalyst slurry produced in (3) at 2.5 g/h in terms of the solid catalyst component, and triethylaluminum at 8.7 ml/h. The polymerization temperature was 63°C, and the pressure was 2.6 MPa/G.

The slurry obtained was fed to a 1000 L volume polymerization vessel equipped with a stirrer, and polymerization was further performed. To the polymerizer, propylene was supplied at 16 kg/h, and hydrogen and ethylene were supplied so that the hydrogen concentration and the ethylene concentration in the gas phase would be 0.36 mol% and 3.6 mol%, respectively. During the polymerization, the polymerization temperature was 60°C, and the pressure was 2.5 MPa/G.

The slurry obtained was fed to a 500 L volume polymerization vessel equipped with a stirrer, and polymerization was further performed. To the polymerizer, propylene was supplied at 5 kg/h, and hydrogen and ethylene were supplied so that the hydrogen concentration and the ethylene concentration in the gas phase would be 0.34 mol% and 3.6 mol%, respectively. During the polymerization, the polymerization temperature was 57°C, and the pressure was 2.5 MPa/G.

The slurry obtained was fed to a 500 L volume polymerization vessel equipped with a stirrer, and polymerization was further performed. To the polymerizer, propylene was supplied at 12 kg/h, and hydrogen and ethylene were supplied so that the hydrogen concentration and the ethylene concentration in the gas phase would be 0.35 mol% and 3.7 mol%, respectively. During the polymerization, the polymerization temperature was 56°C, and the pressure was 2.4 MPa/G.

The slurry obtained was fed to a 500 L volume polymerization vessel equipped with a stirrer, and polymerization was further performed. To the polymerizer, propylene was supplied at 13 kg/h, and hydrogen and ethylene were supplied so that the hydrogen concentration and the ethylene concentration in the gas phase would be 0.35 mol% and 3.8 mol%, respectively. During the polymerization, the polymerization temperature was 55°C, and the pressure was 2.4 MPa/G.

The liquid phase was evaporated from the slurry, and gas-solid separation was performed. The solid phase was vacuum dried at 80°C to give a propylene-ethylene random copolymer. The yield of the propylene-ethylene random copolymer was 73 kg/h.

### (Method for producing propylene-ethylene random copolymer (A-2)〉

The procedures were the same as in the method for producing the propylene-ethylene random copolymer (A-1), except that (4) Main polymerization was performed as described below.

### (4) Main polymerization

To a 70 L volume polymerization vessel equipped with a stirrer, propylene was supplied at 126 kg/h and hydrogen was supplied so that the hydrogen concentration in the gas phase would be 0.36 mol%. There were continuously supplied the catalyst slurry produced in (3) at 1. 6 g/h in terms of the solid catalyst component, and triethylaluminum at 8.9 ml/h. The polymerization temperature was 63°C, and the pressure was 2.6 MPa/G.

The slurry obtained was fed to a 1000 L volume polymerization vessel equipped with a stirrer, and polymerization was further performed. To the polymerizer, propylene was supplied at 14 kg/h, and hydrogen and ethylene were supplied so that the hydrogen concentration and the ethylene concentration in the gas phase would be 0.64 mol% and 3.5 mol%, respectively. During the polymerization, the polymerization temperature was 60°C, and the pressure was 2.5 MPa/G.

The slurry obtained was fed to a 500 L volume polymerization vessel equipped with a stirrer, and polymerization was further performed. To the polymerizer, propylene was supplied at 4 kg/h, and hydrogen and ethylene were supplied so that the hydrogen concentration and the ethylene concentration in the gas phase would be 0.63 mol% and 3.6 mol%, respectively. During the polymerization, the polymerization temperature was 57°C, and the pressure was 2.4 MPa/G.

The slurry obtained was fed to a 500 L volume polymerization vessel equipped with a stirrer, and polymerization was further performed. To the polymerizer, propylene was supplied at 10 kg/h, and hydrogen and ethylene were supplied so that the hydrogen concentration and the ethylene concentration in the gas phase would be 0.63 mol% and 3.8 mol%, respectively. During the polymerization, the polymerization temperature was 55°C, and the pressure was 2.3 MPa/G.

The slurry obtained was fed to a 500 L volume polymerization vessel equipped with a stirrer, and polymerization was further performed. To the polymerizer, propylene was supplied at 17 kg/h, and hydrogen and ethylene were supplied so that the hydrogen concentration and the ethylene concentration in the gas phase would be 0.64 mol% and 3.8 mol%, respectively. During the polymerization, the polymerization temperature was 55°C, and the pressure was 2.3 MPa/G.

The liquid phase was evaporated from the slurry, and gas-solid separation was performed. The solid phase was vacuum dried at 80°C to give a propylene-ethylene random copolymer. The yield of the propylene-ethylene random copolymer was 62 kg/h.

### (Method for producing propylene-ethylene random copolymer (A-3)〉

### (1) Preparation of magnesium compound

A reaction tank (500 L volume) equipped with a stirrer was thoroughly purged with nitrogen gas. There were added 97.2 kg of ethanol, 640 g of iodine and 6.4 kg of metallic magnesium. While performing stirring, the reaction was performed under reflux conditions until the system no longer generated hydrogen gas, thus producing a solid reaction product. The reaction liquid containing the solid reaction product was vacuum dried to afford a target magnesium compound (a solid catalyst carrier).

### (2) Preparation of solid catalyst component

A reaction tank (500 L volume) equipped with a stirrer and thoroughly purged with nitrogen gas was loaded with 30 kg of the magnesium compound (uncrushed), 150 L of purified heptane (n-heptane), 4.5 L of silicon tetrachloride and 5.4 L of di-n-butyl phthalate. 144 L of titanium tetrachloride was added while maintaining the system at 90°C and while performing stirring, and the reaction was performed at 110°C for 2 hours. The solid component was separated and was washed with purified heptane at 80°C. Further, 228 L of titanium tetrachloride was added to the solid component, and the reaction was performed at 110°C for 2 hours. Thereafter, the solid component was sufficiently washed with purified heptane. A solid catalyst component was thus obtained.

### (3) Pretreatment

A 500 L volume reaction tank equipped with a stirrer was loaded with 230 L of purified heptane. There were added 25 kg of the solid catalyst component, triethylaluminum in a ratio of 1.0 mol per 1.0 mol of the titanium atoms in the solid catalyst component, and dicyclopentyldimethoxysilane in a ratio of 1.8 mol per 1.0 mol of the titanium atoms in the solid catalyst component. Thereafter, propylene was supplied until the propylene partial pressure reached 0.03 MPa/G, and the reaction was performed at 25°C for 4 hours. After the completion of the reaction, the supernatant liquid was removed, and the solid catalyst component was washed with purified heptane several times. Further, carbon dioxide was supplied and stirring was performed for 24 hours.

### (4) Polymerization

To a 200 L volume polymerizer equipped with a stirrer were supplied the pretreated solid catalyst component at 3 mmol/hr in terms of the titanium atoms in the component, triethylaluminum at 4 mmol/kg-PP and dicyclopentyldimethoxysilane at 0. 4 mmol/kg-PP, and propylene and ethylene were reacted at a polymerization temperature of 80°C and a polymerization pressure of 2.8 MPa/G. During the reaction, the ethylene concentration and the hydrogen concentration in the polymerizer were 4.0 mol% and 8.8 mol%, respectively.

As a result, a propylene-ethylene random copolymer was obtained which had a content of ethylene-derived structural units of 4.2 wt% and a MFR of 7 g/10 min. (Method for producing propylene-ethylene random copolymer (A-4)〉
(1) Preparation of magnesium compound, (2) Preparation of solid catalyst component and (3) Pretreatment were performed in the same manner as in the method for producing the propylene-ethylene random copolymer (A-3). Thereafter, (4) Polymerization was performed as described below.

To a 200 L volume polymerizer equipped with a stirrer were supplied the pretreated solid catalyst component at 4 mmol/hr in terms of the titanium atoms in the component, triethylaluminum at 3 mmol/kg-PP and diethylaminotriethoxysilane at 0.6 mmol/kg-PP, and propylene and ethylene were reacted at a polymerization temperature of 80°C and a polymerization pressure of 2.8 MPa/G. During the reaction, the ethylene concentration and the hydrogen concentration in the polymerizer were 5.5 mol% and 15.5 mol%, respectively.

As a result, a propylene-ethylene random copolymer was obtained which had a content of ethylene-derived structural units of 4.2 wt% and a MFR of 31 g/10 min.

### (Method for producing propylene-ethylene block copolymer (A'-1))

### (1) Preparation of solid titanium catalyst component

An oscillation mill was provided which had four 4 L volume crusher pots containing 9 kg of steel balls 12 mm in diameter. In a nitrogen atmosphere, 300 g of magnesium chloride, 115 mL of diisobutyl phthalate and 60 mL of titanium tetrachloride were added to each of the pots, and were crushed for 40 hours.

75 g of the crushed mixture was placed into a 5 L flask, to which 1.5 L of toluene was added. The resultant mixture was stirred at 114 °C for 30 minutes and was allowed to stand. The supernatant liquid was removed. Next, the solid was washed with 1.5 L of n-heptane at 20°C three times and was dispersed in 1.5 L of n-heptane to give a transition metal catalyst component slurry. The transition metal catalyst component obtained contained 2 wt% of titanium and 18 wt% of diisobutyl phthalate.

### (2) Production of prepolymerized catalyst

To a 200 L volume autoclave equipped with a stirrer were inserted 115 g of the transition metal catalyst component, 65. 6 mL of triethylaluminum, 22.1 mL of 2-isobutyl-2-isopropyl-1,3-dimethoxypropane and 115 L of heptane. While maintaining the inside temperature at 5°C, 1150 g of propylene was inserted and the reaction was performed for 60 minutes while performing stirring. After the completion of the polymerization, 15.8 mL of titanium tetrachloride was added. A prepolymerized catalyst (catalyst slurry) was thus obtained.

### (3) Main polymerization

To a 1000 L volume polymerization vessel equipped with a stirrer were continuously supplied propylene at 159 kg/h, the catalyst slurry at 1.4 g/h in terms of the transition metal catalyst component, triethylaluminum at 21.9 mL/h, and dicyclopentyldimethoxysilane at 2.8 mL/h. Hydrogen was supplied so that the hydrogen concentration in the gas phase would be 13.4 mol%. The polymerization was performed at a polymerization temperature of 68 °C and a pressure of 3.6 MPa/G.

The slurry obtained was fed to a 500 L volume polymerization vessel equipped with a stirrer, and polymerization was further performed. To the polymerizer, propylene was supplied at 37 kg/h, and hydrogen was supplied so that the hydrogen concentration in the gas phase would be 11.5 mol%. During the polymerization, the polymerization temperature was 68°C, and the pressure was 3.4 MPa/G.

The slurry obtained was fed to a 500 L volume polymerization vessel equipped with a stirrer, and polymerization was further performed. To the polymerizer, propylene was supplied at 19 kg/h, and hydrogen was supplied so that the hydrogen concentration in the gas phase would be 8.0 mol%. During the polymerization, the polymerization temperature was 68°C, and the pressure was 3.4 MPa/G.

The slurry obtained was fed to a 500 L volume polymerization vessel equipped with a stirrer, and polymerization was further performed. To the polymerizer, propylene was supplied at 15 kg/h, and hydrogen was supplied so that the hydrogen concentration in the gas phase would be 0.27 mol%. Ethylene was added so that the polymerization temperature would be 65°C and the pressure would be 3.2 MPa/G. Diethylene glycol ethyl acetate was added in a ratio of 26 times the moles of the Ti component in the transition metal catalyst component.

The slurry obtained was deactivated. The liquid phase was evaporated, and gas-solid separation was performed. The solid phase was vacuum dried at 80°C to give a propylene-ethylene block copolymer.

### [Examples 1 to 10 and Comparative Examples 1 to 8]

With a Henschel mixer, a dry blend was prepared by blending the components described in Tables 1 and 2 in the amounts (parts by weight) described in the tables, and also the following components:
IRGANOX 1010 (manufactured by Ciba Specialty Chemicals) as an antioxidant: 0.1 part by weight,
IRGAFOS 168 (manufactured by Ciba Specialty Chemicals) as an antioxidant: 0.1 part by weight,
LA-52 (manufactured by ADEKA CORPORATION) as a light stabilizer: 0.2 parts by weight, and
MB PPCM 802Y-307 (manufactured by TOKYO PRINTING INK MFG. CO., LTD.) as a pigment: 6 parts by weight. The blend was kneaded and extruded with a twin-screw extruder (co-rotating twin screw extruder NR-II manufactured by Freesia Macross Corporation) at a barrel temperature (kneading temperature) of 210°C, a screw rotational speed of 200 rpm and an output of 20 kg/h. Propylene resin compositions of Examples 1 to 10 and Comparative Examples 1 to 8 were thus obtained.

Next, the resin compositions were molded on an injection molding machine at a molding temperature of 200°C and a mold temperature of 40°C to give Charpy impact strength test pieces and tensile elastic modulus test pieces. Further, the resin compositions were injection molded into plates at a molding temperature of 220°C and a mold temperature of 40°C. The test pieces were tested to evaluate resin properties, and the plates were observed to evaluate appearance characteristics of the molded articles. Table 1 describes the results of Examples 1 to 10, and Table 2 describes the results of Comparative Examples 1 to 6.

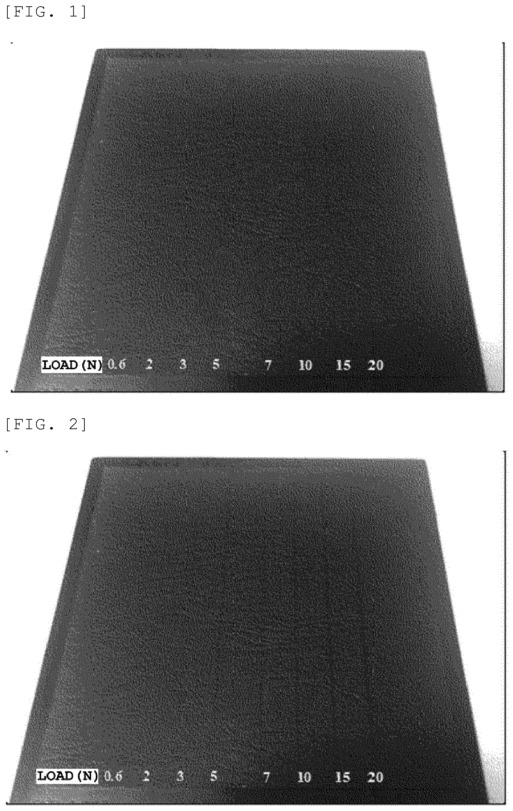

Fig. 1 is a photograph illustrating the test piece of Example 1 after Ford 5-Finger Test in which the glazing resistance was evaluated by allowing a stylus with a tip radius of 7 mm to run on the grained surface of the test piece. Fig. 2 is a photograph illustrating the test piece of Comparative Example 1 after Ford 5-Finger Test in which the glazing resistance was evaluated by allowing a stylus with a tip radius of 7 mm to run on the grained surface of the test piece. The glazing resistant surface is free from traces of the stylus after the test (Fig. 1), whilst the surface poorly resistant to glazing has streaks with different gloss (Fig. 2).

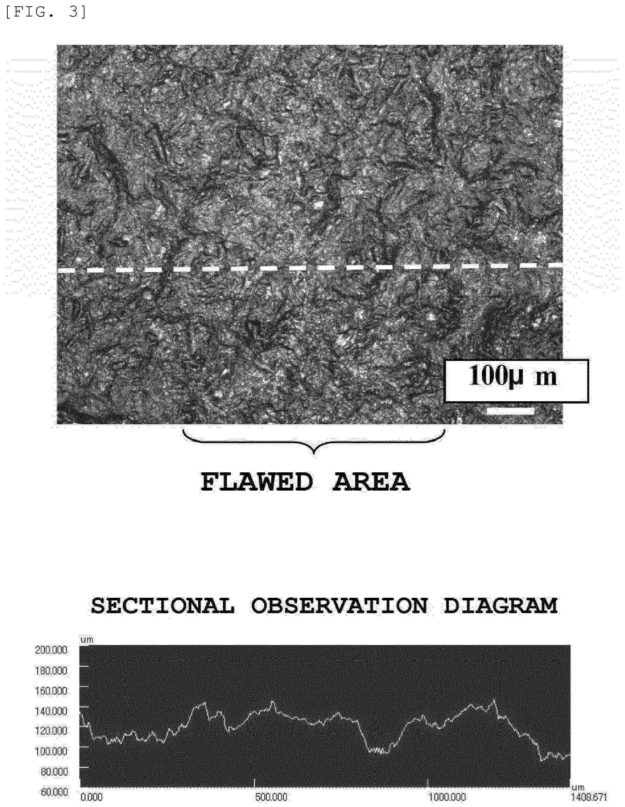

Fig. 3 is a set of a laser micrograph (magnification x200) (upper view) of the test piece of Example 1 after the glazing resistance evaluation, and a graph (sectional observation diagram) (lower view) showing changes in shape in terms of the height from the bottom surface of the test piece to the flawed surface in a cross section indicated with the dotted line in the micrograph.

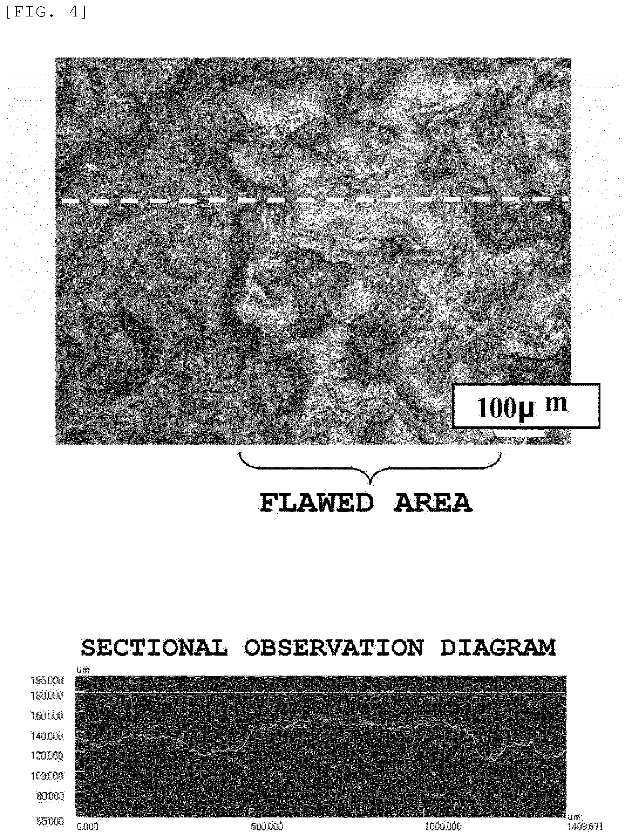

Fig. 4 is a set of a laser micrograph (magnification x200) (upper view) of the test piece of Comparative Example 1 after the glazing resistance evaluation, and a graph (sectional observation diagram) (lower view) showing the height from the bottom surface of the test piece to the flawed surface in a cross section indicated with the dotted line in the micrograph.

Scratched marks are caused when the surface is rubbed with a stylus having a tip radius of 0.2 mm. When rubbed with a stylus having a tip radius of 7 mm, the surface is not scraped but changes its gloss (is flawed). Such flaws result from the flattening of the surface. The test results show that the test piece of Example 1 had good glazing resistance and the test piece of Comparative Example 1 was poor in glazing resistance. Further, the results of the sectional observation show that the flawed area in Comparative Example 1 was flattened, whilst the surface condition was substantially unchanged before and after the test in Example 1.

### [Table 1]

**Table 1**

| | | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|
| (A) Propylene-ethylene random copolymers | (A-1) Propylene-ethylene random copolymer | Parts by weight | | 65 | | 55 | | | | | | |
| | (A-2) Propylene-ethylene random copolymer | Parts by weight | 65 | | 55 | | | | | | 70 | 65 |
| | (A-3) Propylene-ethylene random copolymer | Parts by weight | | | | | | 65 | | 55 | | |
| | (A-4) Propylene-ethylene random copolymer | Parts by weight | | | | | 65 | | 55 | | | |
| (B) Ethylene-α-olefin copolymers | (B-1) Ethylene-butene random copolymer | Parts by weight | 7 | | | | 7 | | | | 5 | |
| | (B-2) Ethylene-butene random copolymer | Parts by weight | 3 | 3 | 15 | 12 | 3 | 3 | 15 | 12 | | |
| | (B-3) Ethylene-butene random copolymer | Parts by weight | | 7 | 5 | 8 | | 7 | 5 | 8 | | |
| | (B-4) Ethylene-octene random copolymer | Parts by weight | | | | | | | | | | 10 |
| (C) Fibrous filler | (C-1) Glass fiber filler | Parts by weight | 25 | 25 | 25 | 25 | 25 | 25 | 25 | 25 | 25 | 25 |
| (D) Lubricant | (D-1) Erucamide | Parts by weight | 0.15 | 0.15 | 0.15 | 0.15 | 0.15 | 0.15 | 0.15 | 0.15 | 0.15 | 0.15 |
| (E) Modified polypropylene | (E-1) Maleic anhydride-modified polypropylene | Parts by weight | 1 | 1 | 1 | 1 | 1 | 1 | 1 | 1 | 1 | 1 |
| (F) Decomposing agent | (F-1) PERHEXA 25B-40 | Parts by weight | | 0.14 | | 0.1 | | 0.14 | | 0.14 | | |
| MFR | | g/10 min | 22 | 25 | 23 | 19 | 23 | 24 | 22 | 25 | 25 | 21 |
| Room-temperature Charpy impact strength (23°C) | | kJ/m² | 18 | 20 | 29 | 31 | 16 | 14 | 24 | 28 | 14 | 19 |
| Tensile elastic modulus | | MPa | 2425 | 2401 | 2087 | 2127 | 2472 | 2510 | 1930 | 1811 | 2782 | 2487 |
| Average fiber length | | mm | 0.80 | 0.78 | 0.83 | 0.81 | 0.82 | 0.78 | 0.82 | 0.75 | 0.80 | 0.79 |
| Gloss (grained surface: Grain C) | | % | 0.6 | 0.6 | 0.6 | 0.6 | 0.8 | 0.8 | 0.8 | 0.8 | 0.6 | 0.7 |
| 5-Finger (stylus tip radius R = 0.2 mm) Whitening onset load | | N | 20 | 20 | 20 | 20 | 20 | 20 | 20 | 20 | 20 | 20 |
| 5-Finger (stylus tip radius R = 7 mm) Gloss change (Flawed area gloss/unflawed area gloss) | | | 1.0 | 1.0 | 1.0 | 1.0 | 1.0 | 1.0 | 1.0 | 1.0 | 1.1 | 1.0 |

### [Table 2]

**Table 2**

| | | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|---|
| (A) Propylene-ethylene random copolymers | (A-1) Propylene-ethylene random copolymer | Parts by weight | 65 | 65 | | | | | 90 | 65 |
| | (A-2) Propylene-ethylene random copolymer | Parts by weight | | | 45 | | 75 | | | |
| | (A-3) Propylene-ethylene random copolymer | Parts by weight | | | | | | | | |
| | (A-4) Propylene-ethylene random copolymer | Parts by weight | | | | 45 | | | | |
| | (A'-1) Propylene-ethylene block copolymer | Parts by weight | | | | | | 61 | | |
| (B) Ethylene-α-olefin copolymers | (B-1) Ethylene-butene random copolymer | Parts by weight | | | | | | | | |
| | (B-2) Ethylene-butene random copolymer | Parts by weight | 3 | 3 | 20 | 20 | | | 3 | 3 |
| | (B-3) Ethylene-butene random copolymer | Parts by weight | 7 | 7 | 10 | 10 | | | 7 | 7 |
| | (B-4) Ethylene-octene random copolymer | Parts by weight | | | | | | 11 | | |
| | (B'-1) Ethylene-propylene-butadiene random copolymer | Parts by weight | | | | | | 8 | | |
| (C) Fibrous fillers | (C-1) Glass fiber filler | Parts by weight | | 25 | 25 | 25 | 25 | | | |
| | (C'-1) Basic magnesium sulfate | Parts by weight | 25 | | | | | | | |
| | (C'-2) Talc | Parts by weight | | | | | | 20 | | 25 |
| (D) Lubricant | (D-1) Erucamide | Parts by weight | 0.15 | | 0.15 | 0.15 | 0.15 | 0.3 | 0.15 | 0.15 |
| (E) Modified polypropylene | (E-1) Maleic anhydride-modified polypropylene | Parts by weight | 1 | 1 | 1 | 1 | 1 | 0.3 | 1 | 1 |
| (F) Decomposing agent | (F-1) PERHEXA 25B-40 | Parts by weight | 0.14 | 0.14 | | | | | 0.1 | 0.1 |
| MFR | | g/10 min | 23 | 22 | 22 | 23 | 30 | 15 | 26 | 20 |
| Room-temperature Charpy impact strength (23°C) | | kJ/m² | 9 | 20 | 44 | 34 | 10 | 16 | 18 | 10 |
| Tensile elastic modulus | | MPa | 1083 | 2394 | 1234 | 1198 | 3088 | 2021 | 436 | 1163 |
| Average fiber length | | mm | 0.001 | 0.78 | 0.83 | 0.82 | 0.84 | - | - | - |
| Gloss (grained surface: Grain C) | | % | 0.7 | 0.6 | 0.6 | 0.8 | 0.6 | 1.1 | 0.8 | 0.8 |
| 5-Finqer (stylus tip radius R = 0.2 mm) | | N | 3 | 10 | 20 | 20 | 20 | 15 | 20 | 3 |
| 5-Finger (stylus tip radius R = 7 mm) | | | 1.3 | 1.0 | 1.0 | 1.0 | 1.1 | 1.3 | 1.2 | 1.3 |

The comparison of Example 1 to Example 10 with Comparative Example 1 will be discussed. Comparative Example 1 which involved magnesium sulfate having an average fiber length of 15 µm and an average fiber diameter of 0.5 µm as the fibrous filler resulted in low impact strength and low rigidity. In contrast, the propylene resin compositions of Examples 1 to 10 which used the fibrous filler having an optimum average fiber length and an optimum average fiber diameter achieved a good balance between impact strength and rigidity.

The comparison of Example 1 to Example 10 with Comparative Example 2 shows that the propylene resin compositions of the invention achieve good flaw resistance by virtue of the use of the lubricant in an appropriate amount.

The comparison of Examples 1 to 8 with Comparative Examples 3 to 5 shows that the use of the component (B) in an appropriate amount optimizes the balance between tensile elastic modulus and room-temperature Charpy impact strength.

From the comparison of Examples 1 to 10 with Comparative Example 6, the selection of the base polypropylene affects grain transfer properties and consequently gloss and also affects elastic recovery, resulting in changes in glazing resistance. Further, a variation in the types of fillers results in changes in scratch resistance.

### INDUSTRIAL APPLICABILITY

The propylene resin compositions of the invention may be suitably used as shaping materials in various fields such as automobile interior and exterior parts including instrument panels and console boxes, and home appliance parts.

## Claims

1. A propylene resin composition comprising components (A) to (E) below in contents of 35 to 85 parts by weight for (A), 5 to 25 parts by weight for (B), 10 to 40 parts by weight for (C), 0.01 to 1.0 part by weight for (D) and 0.1 to 3 parts by weight for (E) with respect to the total of the contents of (A) to (C) taken as 100 parts by weight:
(A) a propylene-ethylene random copolymer having a melt flow rate of 5 to 100 g/10 min as measured at 230°C under 2.16 kg load in accordance with ASTM D1238 and a content of ethylene-derived structural units of 2 to 8 mol% relative to all the structural units;
(B) an ethylene-α-olefin copolymer obtained by copolymerizing ethylene with one or more α-olefins selected from α-olefins having 3 to 10 carbon atoms, the copolymer having a melt flow rate of 0.1 to 80 g/10 min as measured at 230°C under 2.16 kg load in accordance with ASTM D1238;
(C) a fibrous filler having an average fiber length of 0.1 to 2 mm;
(D) a lubricant; and
(E) a modified polypropylene.

2. The propylene resin composition according to claim 1, wherein the content of ethylene-derived structural units in the propylene-ethylene random copolymer (A) is 3 to 8 mol% relative to all the structural units.

3. The propylene resin composition according to claim 1 or 2, wherein the content of α-olefin-derived structural units in the ethylene-α-olefin copolymer (B) is 5 to 60 mol% relative to all the structural units in the copolymer.

4. The propylene resin composition according to any of claims 1 to 3, wherein the fibrous filler (C) is a glass fiber filler.

5. The propylene resin composition according to any one of claims 1 to 4, wherein α-olefin-derived structural units constituting the ethylene-α-olefin copolymer (B) are structural units derived from one or more selected from propylene, 1-butene, 1-hexene and 1-octene.

6. The propylene resin composition according to any one of claims 1 to 5, wherein the lubricant (D) is erucamide.

7. The propylene resin composition according to any one of claims 1 to 6, wherein the modified polypropylene (E) is maleic anhydride-modified polypropylene.

8. A shaped article formed from the propylene resin composition described in any of claims 1 to 7.

9. An automobile interior or exterior part formed from the propylene resin composition described in any of claims 1 to 7.

10. A home appliance part formed from the propylene resin composition described in any of claims 1 to 7.

## Patentansprüche

1. Propylenharzzusammensetzung, umfassend die nachstehenden Komponenten (A) bis (E) in Gehalten von 35 bis 85 Gew.-Teilen für (A), 5 bis 25 Gew.-Teilen für (B), 10 bis 40 Gew.-Teilen für (C), 0,01 bis 1,0 Gew.-Teilen für (D) und 0,1 bis 3 Gew.-Teilen für (E), bezogen auf einen Gesamtgehalt von (A) bis (C) von 100 Gew.-Teilen:
(A) ein Propylen-Ethylen-Random-Copolymer mit einem Schmelzfliessindex von 5 bis 100 g/10 min, gemessen bei 230°C unter einer Last von 2,16 kg gemäss ASTM D1238, und einem Gehalt an von Ethylen abgeleiteten Struktureinheiten von 2 bis 8 mol-%, bezogen auf alle Struktureinheiten;
(B) ein Ethylen-α-Olefin-Copolymer, erhalten durch Copolymerisieren von Ethylen mit einem oder mehreren α-Olefin(en), ausgewählt aus α-Olefinen mit 3 bis 10 Kohlenstoffatomen, wobei das Copolymer einen Schmelzfliessindex von 0,1 bis 80 g/10 min, gemessen bei 230°C unter einer Last von 2,16 kg gemäss ASTM D1238, aufweist;
(C) ein faseriger Füllstoff mit einer durchschnittlichen Faserlänge von 0,1 bis 2 mm;
(D) ein Gleitmittel; und
(E) ein modifiziertes Polypropylen.

2. Propylenharzzusammensetzung gemäss Anspruch 1, wobei der Gehalt an von Ethylen abgeleiteten Struktureinheiten in dem Propylen-Ethylen-Random-Copolymer (A) 3 bis 8 mol-%, bezogen auf alle Struktureinheiten, beträgt.

3. Propylenharzzusammensetzung gemäss Anspruch 1 oder 2, wobei der Gehalt an von α-Olefin abgeleiteten Struktureinheiten in dem Ethylen-α-Olefin-Copolymer (B) 5 bis 60 mol-%, bezogen auf alle Struktureinheiten in dem Copolymer, beträgt.

4. Propylenharzzusammensetzung gemäss einem der Ansprüche 1 bis 3, wobei der faserige Füllstoff (C) ein Glasfaserfüllstoff ist.

5. Propylenharzzusammensetzung gemäss irgendeinem der Ansprüche 1 bis 4, wobei die von α-Olefin abgeleiteten Struktureinheiten, die das Ethylen-α-Olefin-Copolymer (B) bilden, Struktureinheiten sind, die von einem oder mehreren, ausgewählt aus Propylen, 1-Buten, 1-Hexen und 1-Octen, abgeleitet sind.

6. Propylenharzzusammensetzung gemäss irgendeinem der Ansprüche 1 bis 5, wobei das Gleitmittel (D) Erucamid ist.

7. Propylenharzzusammensetzung gemäss irgendeinem der Ansprüche 1 bis 6, wobei das modifizierte Polypropylen (E) Maleinsäureanhydrid-modifiziertes Polypropylen ist.

8. Formartikel, der aus der Propylenharzzusammensetzung, wie in einem der Ansprüche 1 bis 7 beschrieben, gebildet ist.

9. Automobilinnenraum- oder -aussenteil, das aus der Propylenharzzusammensetzung, wie in einem der Ansprüche 1 bis 7 beschrieben, gebildet ist.

10. Haushaltsgeräteteil, das aus der Propylenharzzusammensetzung, wie in einem der Ansprüche 1 bis 7 beschrieben, gebildet ist.

## Revendications

1. Composition de résine de propylène comprenant les composants (A) à (E) ci-dessous dans des teneurs de 35 à 85 parties en poids pour (A), de 5 à 25 parties en poids pour (B), de 10 à 40 parties en poids pour (C), de 0,01 à 1,0 partie en poids pour (D) et de 0,1 à 3 parties en poids pour (E) par rapport au total des teneurs de (A) à (C) considérées comme 100 parties en poids :
(A) un copolymère statistique de propylène-éthylène ayant un indice de fluage à l'état fondu de 5 à 100 g/10 min tel que mesuré à 230°C sous une charge de 2,16 kg selon la norme ASTM D1238 et une teneur d'unités structurelles dérivées de l'éthylène de 2 à 8 % en mole par rapport à toutes les unités structurelles ;
(B) un copolymère d'éthylène-α-oléfine obtenu par copolymérisation d'éthylène avec une ou plusieurs α-oléfines choisies parmi les α-oléfines ayant de 3 à 10 atomes de carbone, le copolymère ayant un indice de fluage à l'état fondu de 0,1 à 80 g/10 min tel que mesuré à 230 °C sous une charge de 2,16 kg selon la norme ASTM D1238 ;
(C) une charge fibreuse ayant une longueur moyenne des fibres de 0,1 à 2 mm ;
(D) un lubrifiant ; et
(E) un polypropylène modifié.

2. Composition de résine de propylène selon la revendication 1, dans laquelle la teneur des unités structurelles dérivées de l'éthylène dans le copolymère statistique de propylène-éthylène (A) est de 3 à 8 % en mole par rapport à toutes les unités structurelles.

3. Composition de résine de propylène selon la revendication 1 ou 2, dans laquelle la teneur des unités structurelles dérivées d'a-oléfine dans le copolymère d'éthylène-α-oléfine (B) est de 5 à 60 % en mole par rapport à toutes les unités structurelles dans le copolymère.

4. Composition de résine de propylène selon l'une quelconque des revendications 1 à 3, dans laquelle la charge fibreuse (C) est une charge de fibres de verre.

5. Composition de résine de propylène selon l'une quelconque des revendications 1 à 4, dans laquelle les unités structurelles dérivées d'a-oléfine constituant le copolymère d'éthylène-α-oléfine (B) sont des unités structurelles dérivées d'un ou plusieurs choisis parmi le propylène, le 1-butène, le 1-hexène et le 1-octène.

6. Composition de résine de propylène selon l'une quelconque des revendications 1 à 5, dans laquelle le lubrifiant (D) est l'érucamide.

7. Composition de résine de propylène selon l'une quelconque des revendications 1 à 6, dans laquelle le polypropylène modifié (E) est le polypropylène modifié par anhydride maléique.

8. Produit moulé formé à partir de la composition de résine de propylène selon l'une quelconque des revendications 1 à 7.

9. Partie intérieure ou extérieure d'automobile formée à partir de la composition de résine de propylène selon l'une quelconque des revendications 1 à 7.

10. Partie d'appareil ménager formée à partir de la composition de résine de propylène selon l'une quelconque des revendications 1 à 7.
